# EUROPÄISCHE PATENTSCHRIFT

(11) **EP 2 561 111 B1**
(45) Veröffentlichungstag und Bekanntmachung des Hinweises auf die Patenterteilung: **12.10.2016**
(21) Anmeldenummer: 11714732.2
(22) Anmeldetag: 06.04.2011
(51) Int. Cl.: C23C 8/20, C23C 8/24, C23C 8/30, C23C 8/34

(54) **VERFAHREN ZUR CARBONITRIERUNG VON METALLISCHEN BAUTEILEN**
METHOD FOR CARBONITRIDING METALLIC COMPONENTS
PROCÉDÉ DE CARBONITRURATION D'ÉLÉMENTS MÉTALLIQUES

(30) Priorität: 23.04.2010 DE 102010028165
(43) Veröffentlichungstag der Anmeldung: 27.02.2013
(73) Patentinhaber: Robert Bosch GmbH, 70442 Stuttgart (DE)
(72) Erfinder: SCHWARZER, Jochen, 71634 Ludwigsburg (DE); HAGYMASI, Laszlo, 70839 Gerlingen (DE); WALDENMAIER, Thomas, 71691 Freiberg/Neckar (DE)
(86) Internationale Anmeldenummer: PCT/EP2011/055359
(87) Internationale Veröffentlichungsnummer: WO 2011/131487

(56) Entgegenhaltungen:
- EP-B1- 1 466 990
- DE-A1- 10 322 255
- DE-A1-102009 002 985
- JP-A- 55 040 843
- JP-A- 2006 028 541
- JP-A- 2008 144 266

## Beschreibung

### Stand der Technik

Die Erfindung betrifft ein Verfahren zur Carbonitrierung von metallischen Bauteilen, insbesondere von Stahlteilen. Speziell betrifft die Erfindung ein Verfahren zur Carbonitrierung von metallischen Bauteilen von Brennstoffeinspritzanlagen von luftverdichtenden, selbstzündenden Brennkraftmaschinen oder einer luftverdichtenden, selbstzündenden Brennkraftmaschine. Ferner eignet sich das Verfahren auch für Getriebekomponenten.

Aus der DE 199 09 694 A1 ist ein Verfahren zum Carbonitrieren bei Unterdruckverfahren ohne Plasmaunterstützung bekannt. Bei dem bekannten Verfahren wird molekularer Stickstoff als Spendergas verwendet, wobei die Anreicherung einer Randschicht eines Stahlteils mit Stickstoff am Ende des Prozesses erfolgt. Als letzte Stufe wird an einen Unterdruckaufkohlungsprozess die Carbonitrierstufe mit Stickstoff als Spender angehängt. Der Prozessdruck liegt bei dieser Stufe höher als der Druck der Aufkohlungsstufe. Hierbei kann die Zugabe des Stickstoffspenders nicht nur im letzten Prozessschritt, sondern auch während des gesamten Prozesses erfolgen.

Das aus der DE 199 09 694 A1 bekannte Verfahren hat den Nachteil, dass sich im Grundwerkstoff aufgrund der über längere Zeiten wirkenden hohen Kohlenstoffkonzentration Carbide bilden können, die sich während der weiteren Wärmebehandlung nicht mehr auflösen. Je nach Beanspruchung führen oberflächennahe Carbide zu einem frühzeitigen Bauteilversagen.

JP2006028541 A offenbart ein Verfahren zum Carbonitrieren von mechanischen Bauteilen mit den folgenden Schritten: eine Aufstickungsphase bei einer Temperatur T1; eine Aufkohlungsphase bei einer Temperatur T2; eine weitere Aufstickungsphase bei einer Temperatur T3.

### Offenbarung der Erfindung

Das erfindungsgemäße Verfahren mit den Merkmalen des Anspruchs 1 hat demgegenüber den Vorteil, dass eine verbesserte Carbonitrierung des metallischen Bauteils ermöglicht und somit verbesserte Werkstoffeigenschaften erzielbar sind.

Durch die in den Unteransprüchen aufgeführten Maßnahmen sind vorteilhafte Weiterbildungen des im Anspruch 1 angegebenen Verfahrens möglich. In vorteilhafter Weise dient das Verfahren zur Niederdruck-Carbonitrierung. Das Verfahren kann hierbei zur carbidkontrollierten Carbonitrierung dienen, bei dem ein oder mehrere metallische Bauteile mit einem carbidfreien oder carbidkontrollierten oberflächennahen Bereich hergestellt werden.

Beim Niederdruckaufkohlen kann bei Randkohlenstoffgehalten ab etwa 0,5 bis 0,7 Massenprozent an Kanten, Gewinden, Bohrungsverschneidungen und dergleichen ein erhöhter Kohlenstoffgehalt am oberflächennahen Bereich vorliegen. Dies ist darauf zurückzuführen, dass durch die größere aufkohlbare Oberfläche bezogen auf das darunter liegende Volumen im Vergleich zu ebenen Oberflächen weniger Kohlenstoff von der Oberfläche weg in das Volumen diffundieren kann. Dadurch werden über längere Zeiten Kohlenstoffkonzentrationen nahe beziehungsweise über der Löslichkeitsgrenze des Grundwerkstoffs aufrechterhalten, wodurch Carbide gebildet werden, die sich während der weiteren Wärmebehandlung nicht mehr auflösen können. Je nach Beanspruchung können solche oberflächennahen Carbide zu einem frühzeitigen Bauteilversagen führen. Das Abtragen solcher carbidreicher Oberflächenbereiche, die versagenskritisch sind, durch Nachbearbeitungsschritte, wie beispielsweise Schleifen, ist allerdings kostenintensiv und nicht in jedem Fall durchführbar. Speziell bei komplexeren Geometrien, wie beispielsweise Bohrungsverschneidungen, ist eine solche Nachbearbeitung aufwändig oder gegebenenfalls auch nicht mehr möglich.

Da sowohl Stickstoff als auch Kohlenstoff interstitiell im Eisengitter gelöst werden können, kann eine Carbidbildung durch den eingebrachten Stickstoff beeinflusst werden. Z.B. kann durch das Belegen von interstitiellen Gitterplätzen mit Stickstoffatomen vor der eigentlichen Einbringung von Kohlenstoff die maximal mögliche Kohlenstoffkonzentration soweit verringert werden, dass eine Carbidbildung verhindert oder reduziert werden kann.

Somit kann speziell eine Carbidbildung in oberflächennahen Bereichen bei kritischen Geometrien eines oder mehrerer metallischer Bauteile, wie z.B. bei Gewindegängen und Bohrungsverschneidungen, mithilfe einer Carbonitrierung verringert oder vermieden werden.

In vorteilhafter Weise wird das metallische Bauteil in einer Aufheizphase auf eine Behandlungstemperatur aufgeheizt, in mindestens einer Aufstickungsphase mit einem Stickstoffspendergas aufgestickt und in mindestens einer Aufkohlungsphase mit einem Kohlenstoffspendergas aufgekohlt. Hierbei erfolgt vor jeder Aufkohlungsphase mindestens eine Aufstickungsphase. Dass vor jeder Aufkohlungsphase eine Aufstickungsphase durchgeführt wird, hat den Vorteil, dass der eingebrachte Stickstoff die aufnehmbare Kohlenstoffmenge in der Eisenmatrix reduziert, wodurch eine Carbidbildung vermindert oder vermieden wird. Anschließend kann zur Verringerung des Effekts, dass Stickstoff mit der Zeit wieder aus der Oberfläche effundiert, mindestens eine weitere Aufstickungsphase erfolgen.

Vorteilhaft ist es somit, dass mehrere Aufkohlungsphasen vorgesehen sind und dass jeder Aufkohlungsphase eine vorausgehende Aufstickungsphase zugeordnet ist. Hierbei ist es ferner vorteilhaft, dass eine Aufheizphase vorgesehen ist, in der das metallische Bauteil auf die Behandlungstemperatur aufgeheizt wird, und dass die Aufheizphase vor den Aufstickungsphasen und den Aufkohlungsphasen liegt. In vorteilhafter Weise kann die Behandlungstemperatur hierbei in einem Bereich von etwa 780°C bis etwa 1050°C liegen.

Ferner ist es vorteilhaft, dass zumindest ein Prozessgaswechsel zwischen einer Aufstickungsphase und einer nachfolgenden Aufkohlungsphase vorgesehen ist, in der das in der Aufstickungsphase eingesetzte Stickstoffspendergas mit einem Inertgas verdrängt wird, und/oder dass zumindest ein Prozessgaswechsel zwischen einer Aufkohlungsphase und einer nachfolgenden Aufstickungsphase vorgesehen ist, in der das in der Aufkohlungsphase eingesetzte Kohlenstoffspendergas verdrängt wird. Somit kann nach jeder Aufstickungsphase oder Aufkohlungsphase zum Zwecke des Prozessgaswechsels die Behandlungskammer oder dergleichen mit einem Inertgas, beispielsweise mit Stickstoff oder Argon, gespült werden. Möglich ist es auch, dass die Behandlungskammer für den Prozessgaswechsel evakuiert wird.

Die gewünschte Kohlenstoff- und Stickstoffkonzentrationsverteilung in der Randschicht beziehungsweise im Bereich der Oberfläche des metallischen Bauteils kann in vorteilhafter Weise durch eine geeignete Wahl der Zeitpunkte und der Dauern der Aufstickungsphasen, Aufkohlungsphasen und weiterer Phasen, insbesondere Diffusionsphasen, eingestellt werden. Zur Auslegung des Gesamtprozesses können in vorteilhafter Weise Simulationsmodelle herangezogen werden, die die Diffusion von Stickstoff und Kohlenstoff in Abhängigkeit von einer Zeitdauer, einer Temperatur, einer Werkstoffzusammensetzung und gegebenenfalls weiteren Parametern berechnen.

Vorteilhaft ist es, dass das Stickstoffspendergas Ammoniak und/oder Stickstoff enthält. Ferner ist es vorteilhaft, dass das Kohlenstoffspendergas Acetylen und/oder Ethylen und/oder Propan und/oder Propen und/oder Methan und/oder Cyclohexan und/oder Cyclopentan aufweist.

Ferner ist es vorteilhaft, dass zumindest eine Diffusionsphase vorgesehen ist, in der eine Evakuierung erfolgt und/oder in der das metallische Bauteil zumindest im Wesentlichen mit einem Inertgas umgeben ist, und dass die Diffusionsphase einer Aufstickungsphase oder einer Aufkohlungsphase nachfolgt. Hierbei können auch mehrere Diffusionsphasen vorgesehen sein. Insbesondere kann eine Diffusionsphase nach einer ersten Aufstickungsphase vorgesehen sein und eine weitere Diffusionsphase kann nach einer abschließenden Aufkohlungsphase vorgesehen sein. Dadurch ist eine vorteilhafte Carbonitrierung des metallischen Bauteils möglich.

Ein Merkmal der Erfindung ist es, dass das metallische Bauteil in einem Oberflächenbereich an einem Gewinde, einer Verschneidung, einer Kante oder einem Vorsprung aufgestickt wird und/oder dass das metallische Bauteil eine Getriebekomponente ist und/oder dass das metallische Bauteil eine Verzahnungsgeometrie aufweist, an der die Oberfläche des Bauteils aufgestickt wird.

Somit kann speziell an Oberflächenbereichen des Bauteils, an denen die Oberfläche im Vergleich zu dem dahinter bestehenden Volumen relativ groß ist und somit in Bezug auf das betreffende Volumen eine Erhöhung der Kohlenstoffkonzentration begünstigt ist, eine zu hohe Kohlenstoffkonzentration vermieden werden. Somit kann die maximal mögliche Kohlenstoffkonzentration verringert werden, um eine Carbidbildung zu verhindern.

### Kurze Beschreibung der Zeichnungen

Bevorzugte Ausführungsbeispiele der Erfindung sind in der nachfolgenden Beschreibung unter Bezugnahme auf die beigefügten Zeichnungen näher erläutert. Es zeigt:
Fig. 1 eine schematische Darstellung einer Prozessführung eines Verfahrens zur Niederdruck-Carbonitrierung entsprechend einem Ausführungsbeispiel der Erfindung;
Fig. 2 eine auszugsweise Darstellung einer Kante eines metallischen Bauteils, das mit einem gewöhnlichen Verfahren zur Carbonitrierung hergestellt ist;
Fig. 3 eine auszugsweise schematische Darstellung einer Kante eines metallischen Bauteils, das mit dem Verfahren zur Carbonitrierung entsprechend dem Ausführungsbeispiel der Erfindung hergestellt ist und
Fig. 4 Konzentrations-Tiefenprofile für die in den Figuren 2 und 3 dargestellten metallischen Bauteile in einer schematischen Darstellung zur Veranschaulichung des Ausführungsbeispiels der Erfindung.

### Ausführungsformen der Erfindung

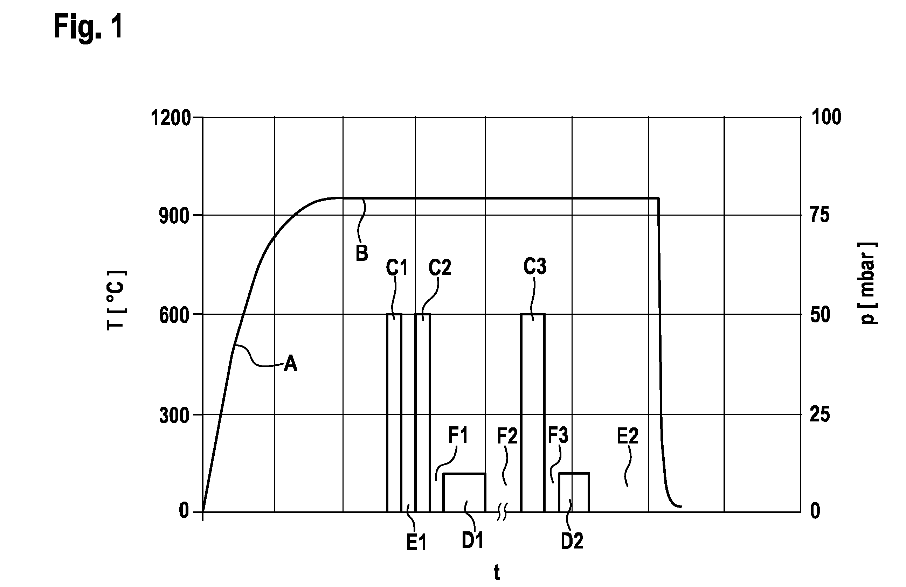

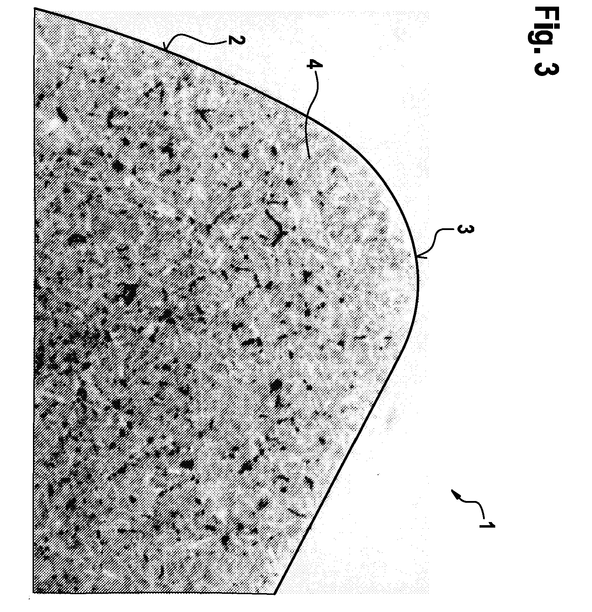

Fig. 1 zeigt eine Prozessführung eines Verfahrens zur Niederdruck-Carbonitrierung entsprechend einem Ausführungsbeispiel der Erfindung in einer schematischen Darstellung. Hierbei ist an der Abszisse die Zeit t aufgetragen. Das Verfahren wird an einem metallischen Bauteil 1 (Fig. 3) durchgeführt, das sich beispielsweise in einer Behandlungskammer befindet. An der Ordinate des in Fig. 1 dargestellten Diagramms ist einerseits die Temperatur in der Behandlungskammer dargestellt. Andererseits sind an der Ordinate die Partialdrücke eines Stickstoffspendergases und eines Kohlenstoffspendergases aufgetragen.

Das Verfahren zur Niederdruck-Cabonitrierung beginnt mit einer Aufheizphase A. In der Aufheizphase wird die Temperatur T auf eine Behandlungstemperatur erhöht. Die Behandlungstemperatur liegt in diesem Ausführungsbeispiel über 900°C. Die Behandlungstemperatur kann hierbei vorzugsweise in einem Bereich von etwa 780°C bis etwa 1050°C liegen. Nachdem die Behandlungstemperatur von etwas mehr als 900°C erreicht ist, folgt eine Temperaturvergleichmäßigungsphase B. Im Anschluss daran wird eine Aufstickungsphase C1 durchgeführt. In der Aufstickungsphase C1 wird der Partialdruck eines Stickstoffspendergases erhöht. An die Aufstickungsphase C1 schließt sich eine Diffusionsphase E1 an. An die Diffusionsphase E1 schließt sich eine weitere Aufstickungsphase C2 an, in der der Partialdruck des Stickstoffspendergases wieder erhöht wird. An die Aufstickungsphase C2 schließt sich ein Prozessgaswechsel F1 an. An den Prozessgaswechsel F1 schließt sich eine Aufkohlungsphase D1 an, in der ein Partialdruck eines Kohlenstoffspendergases erhöht wird. An die Aufkohlungsphase D1 schließt sich ein Prozessgaswechsel F2 an. Nach dem Prozessgaswechsel F2 wird eine Aufstickungsphase C3 durchgeführt, in der der Partialdruck des Stickstoffspendergases erhöht wird. An die Aufstickungsphase C3 schließt sich ein weiterer Prozessgaswechsel F3 an. Nach dem Prozessgaswechsel F3 erfolgt eine zweite Aufkohlungsphase D2, in der der Partialdruck des Kohlenstoffspendergases erhöht wird. An die Aufkohlungsphase D2 schließt sich eine zweite Diffusionsphase E2 an. Am Ende der zweiten Diffusionsphase E2 wird die Temperatur wieder abgesenkt, das heißt es erfolgt eine Abkühlung des metallischen Bauteils 1.

Speziell kann während der Aufheizphase A die Temperatur T mit einer konstanten Aufheizrate kontinuierlich bis auf eine Behandlungstemperatur T von etwa 950°C erhöht werden.

In der an die Aufheizphase A anschließenden Temperaturvergleichmäßigungsphase B wird die Behandlungstemperatur konstant auf etwa 950°C gehalten. Während der Aufheizphase A und der Temperaturvergleichmäßigungsphase B wird dabei weder ein Stickstoffspendergas noch ein Kohlenstoffspendergas zugeführt.

In der an die Temperaturvergleichmäßigungsphase B anschließenden ersten Aufstickungsphase C1 wird ein Stickstoffspendergas, beispielsweise Ammoniak, mit einem Stickstoffspendergas-Partialdruck von etwa 50 mbar zugeführt. Daran anschließend folgt eine erste Diffusionsphase E1, bei der die Behandlungskammer evakuiert oder mit einem Inertgas gespült wird. Als Inertgas kann hierbei Stickstoff oder Argon dienen. Darauf folgt die zweite Aufstickungsphase C2 mit einem Stickstoffspendergas bei einem Stickstoffspendergas-Partialdruck von etwa 50 mbar. Als Stickstoffspendergas kann beispielsweise Ammoniak dienen.

Anschließend erfolgt ein erster Prozessgaswechsel F1, bei dem die Behandlungskammer evakuiert oder mit einem Inertgas, beispielsweise Stickstoff oder Argon, gespült wird. An den ersten Prozessgaswechsel schließt sich eine Aufkohlungsphase D1 mit einem Kohlenstoffspendergas-Partialdruck von etwa 10 mbar an.

Die weitere Prozessführung wird entsprechend durchgeführt. Hierbei erfolgt ein zweiter Prozessgaswechsel F2, bei dem die Behandlungskammer evakuiert oder mit einem Inertgas gespült wird. Bei der anschließenden Aufstickungsphase C3 kann wiederum ein Stickstoffspendergas-Partialdruck von etwa 50 mbar vorgegeben sein. Der darauf folgende Prozessgaswechsel kann wiederum durch Evakuieren oder Spülen mit dem Inertgas erfolgen. Die zweite Aufkohlungsphase D2 kann wiederum mit einem Kohlenstoffspendergas-Partialdruck von etwa 10 mbar durchgeführt werden. Nach der zweiten Aufkohlungsphase D2 wird die zweite Diffusionsphase E2 durchgeführt, nach der in diesem Ausführungsbeispiel das metallische Bauteil 1 abgekühlt wird. Bei der Durchführung der zweiten Diffusionsphase E2 kann die Behandlungskammer evakuiert oder mit einem Inertgas, beispielsweise Stickstoff oder Argon, gespült werden.

Somit umfasst das Verfahren in diesem Ausführungsbeispiel eine Aufheizphase A, eine Temperaturvergleichmäßigungsphase B, drei Aufstickungsphasen C1, C2, C3, zwei Aufkohlungsphasen D1, D2, zwei Diffusionsphasen E1, E2 und drei Prozessgaswechsel F1, F2, F3 sowie eine Abkühlungsphase.

Bei der Durchführung des Verfahrens wird vor jeder Aufkohlungsphase D1, D2 zumindest eine Aufstickungsphase C1, C2, C3 durchgeführt. In diesem Ausführungsbeispiel werden vor der Aufkohlungsphase D1 die beiden Aufstickungsphasen C1, C2 durchgeführt. Und vor der Aufkohlungsphase D2 wird die Aufstickungsphase C3 durchgeführt.

Je nach Ausgestaltung des Verfahrens können auch weitere Aufkohlungsphasen durchgeführt werden. Solchen weiteren Aufkohlungsphasen geht jeweils wiederum zumindest eine Aufstickungsphase voran. Zwischen den einzelnen Aufstickungsphasen und Aufkohlungsphasen werden in geeigneter Weise Diffusionsphasen beziehungsweise Prozessgaswechsel durchgeführt.

Somit können auf diese Weise zahlreiche Abwandlungen des Verfahrens zur carbidfreien oder carbidkontrollierten Carbonitrierung durchgeführt werden. Hiermit kann in vorteilhafter Weise die Gefügestruktur des metallischen Bauteils 1 beeinflusst werden. Diese vorteilhafte Beeinflussung besteht speziell im Bereich von Kanten oder anderen Ausgestaltungen, die eine unebene Oberfläche 2 (Fig. 3) zur Folge haben.

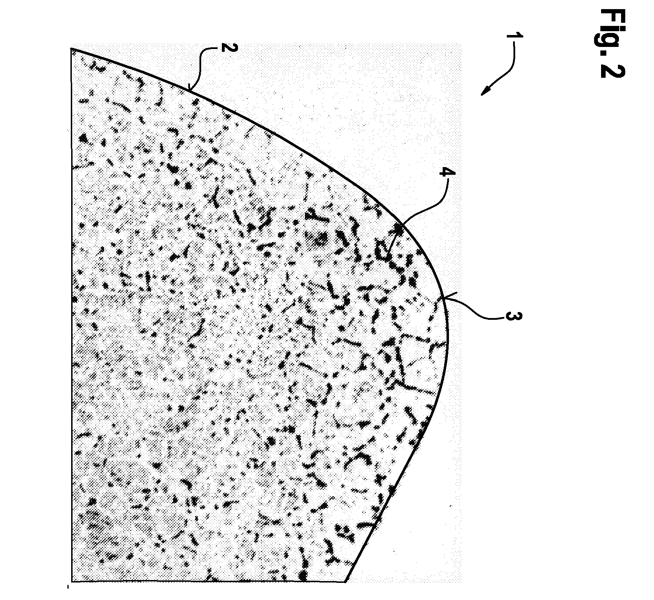

Fig. 2 zeigt eine schematische, metallographische Gefügedarstellung einer carbonitrierten Kante 3 eines metallischen Bauteils 1 in einer auszugsweisen, schematischen Darstellung. Entsprechend zeigt Fig. 3 eine metallographische Gefügedarstellung einer carbidkontrollierten carbonitrierten Kante 3 des metallischen Bauteils 1 entsprechend dem Ausführungsbeispiel der Erfindung in einer schematischen Darstellung.

Die in Fig. 2 dargestellte Kante 3 weist einen etwa 50 µm breiten Randbereich 4 unter der Oberfläche 2 an der Kante 3 auf, in dem die Carbidkonzentration erhöht ist. Durch diese hohe Carbidkonzentration am Randbereich 4 ergibt sich eine ungünstige Beeinflussung der Belastbarkeit des Bauteils. Speziell kann es bei einer Beanspruchung aufgrund der oberflächennahen Carbide zu einem frühzeitigen Bauteilversagen kommen, bei dem im Bereich der Kante 3 Ausbrüche oder andere mechanische Beschädigungen auftreten.

Bei dem in der Fig. 3 dargestellten metallischen Bauteil 1 ist die Carbonitrierung durch das Verfahren zur Carbonitrierung entsprechend dem Ausführungsbeispiel der Erfindung ausgeführt. Hierdurch ergibt sich in einem etwa 15 µm breiten Randbereich 4 eine stark reduzierte Carbidkonzentration. Somit wird eine unerwünscht hohe Carbidkonzentration vermieden.

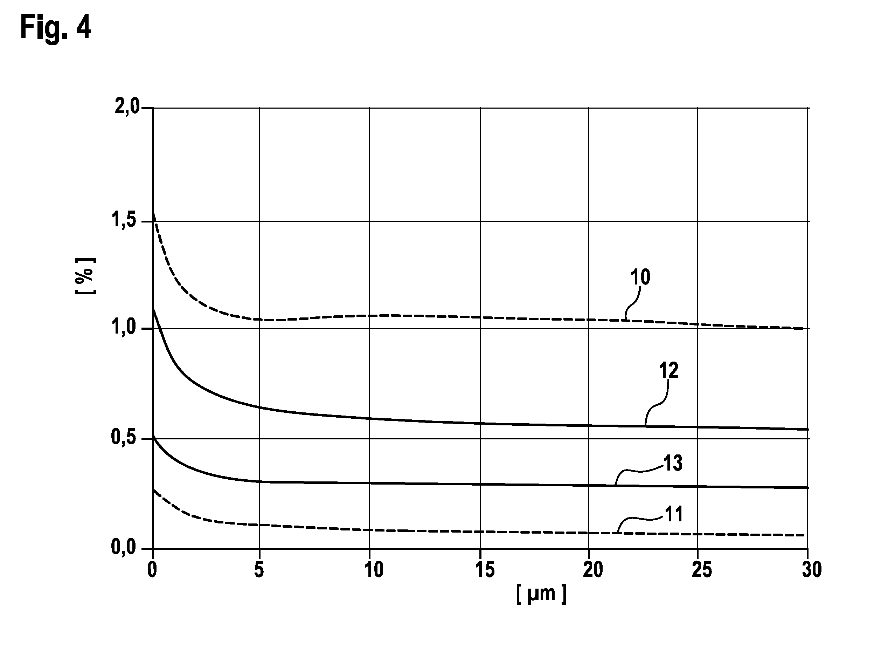

Fig. 4 zeigt eine Tiefenprofilanalyse der in Fig. 2 und Fig. 3 dargestellten Bauteile 1 in einer schematischen Darstellung. Hierbei ist an der Abszisse die Tiefe des Randbereichs 4 von der Oberfläche 2 aus dargestellt. An der Ordinate sind Massenkonzentrationen in Prozent dargestellt. Hierbei ist durch die unterbrochen dargestellte Kurve 10 der Kohlenstoffgehalt der carbidhaltigen Verschneidung im Randbereich 4, wie er bei dem in der Fig. 2 dargestellten metallischen Bauteil 1 auftritt, dargestellt. Durch die unterbrochen dargestellte Kurve 11 ist der Stickstoffgehalt der carbidhaltigen Verschneidung des Randbereichs 4 dargestellt, wie er bei dem in der Fig. 2 dargestellten metallischen Bauteil 1 auftritt. Durch die Kurve 12 ist der Kohlenstoffgehalt der carbidkontrollierten Verschneidung im Randbereich 4 des metallischen Bauteils 1 entsprechend dem Ausführungsbeispiel der Erfindung dargestellt, das in der Fig. 3 gezeigt ist. Und durch die Kurve 13 ist der Stickstoffgehalt der carbidkontrollierten Verschneidung im Randbereich 4 des metallischen Bauteils 1 entsprechend dem Ausführungsbeispiel der Erfindung dargestellt, wie es in der Fig. 3 gezeigt ist.

Durch das Verfahren zur Carbonitrierung entsprechend dem Ausführungsbeispiel der Erfindung kann der Kohlenstoffgehalt im Randbereich 4 an der Kante 3 erheblich abgesenkt werden, wie es der Vergleich der Kurve 10 für eine herkömmliche Ausgestaltung mit der Kurve 12 für eine Ausgestaltung entsprechend dem Ausführungsbeispiel der Erfindung zeigt. Gleichzeitig wird die Stickstoffkonzentration im Randbereich 4 an der Kante 3 durch die Ausgestaltung des Verfahrens entsprechend dem Ausführungsbeispiel der Erfindung erhöht, wie es der Vergleich der Kurve 11 für eine herkömmliche Durchführung mit der Kurve 13 für eine Durchführung entsprechend dem Ausführungsbeispiel der Erfindung zeigt.

Durch die Reduzierung der Kohlenstoffkonzentration bei gleichzeitiger Erhöhung der Stickstoffkonzentration können vergleichbare Härteresultate erzielt werden.

Somit kann in vorteilhafter Weise eine Beeinflussung der Gefügestruktur des metallischen Bauteils in kritischen Oberflächenbereichen erzielt werden, an denen die Oberfläche 2 des Bauteils 1 nicht eben ist. Speziell kann an einem Gewinde, an einer Verschneidung, an einer Kante oder dergleichen eine Aufstickung durchgeführt werden, so dass eine vorteilhafte Reduzierung der ansonsten zu hohen Carbidkonzentration ermöglicht ist. Hierbei kann eine hohe Belastbarkeit und zugleich eine erforderliche Härte des metallischen Bauteils 1 an solchen kritischen Oberflächenbereichen erzielt werden.

Speziell eignet sich das Verfahren zur Carbonitrierung entsprechend dem Ausführungsbeispiel der Erfindung für Bauteile von luftverdichtenden, selbstzündenden Brennkraftmaschinen oder für Brennstoffeinspritzanlagen von solchen Brennkraftmaschinen. Speziell können Bauteile für Hochdruckeinspritzpumpen, Komponenten von Dieseleinspritzmotoren, Drosselscheiben und dergleichen hergestellt werden. Ferner eignet sich das Verfahren auch für Getriebekomponenten.

Die Erfindung ist nicht auf die beschriebenen Ausführungsbeispiele beschränkt.

## Patentansprüche

1. Verfahren zur Carbonitrierung von metallischen Bauteilen (1), wobei zumindest eine Aufkohlungsphase (D1, D2) vorgesehen ist, in der das metallische Bauteil (1) mit einem Kohlenstoffspendergas aufgekohlt wird, wobei zumindest eine der Aufkohlungsphase (D1, D2) zugeordnete Aufstickungsphase (C1, C2, C3) vorgesehen ist, die der Aufkohlungsphase (D1, D2) vorausgeht, und wobei das metallische Bauteil (1) in der Aufstickungsphase (C1, C2, C3) oberflächig an einem Oberflächenbereich (4) des metallischen Bauteils (1) mittels eines Stickstoffspendergases aufgestickt wird, **dadurch gekennzeichnet, dass** eine Aufheizphase (A) vorgesehen ist, in der das metallische Bauteil (1) auf eine Behandlungstemperatur aufgeheizt wird, dass die Aufheizphase (A) vor der Aufstickungsphase (C1, C2, C3) und der Aufkohlungsphase (D1, D2) liegt, dass sämtliche Aufstickungsphasen (C1, C2, C3) und Aufkohlungsphasen (D1, D2) bei der Behandlungstemperatur erfolgen und dass das metallische Bauteil (1) in einem Oberflächenbereich (4) an einem Gewinde, einer Verschneidung, einer Kante (3) oder einem Vorsprung aufgestickt wird und/oder dass das metallische Bauteil (1) eine Getriebekomponente ist und/oder dass das metallische Bauteil (1) eine Verzahnungsgeometrie aufweist, an der die Oberfläche (4) des Bauteils (1) aufgestickt wird.

2. Verfahren nach Anspruch 1, **dadurch gekennzeichnet, dass** mehrere Aufkohlungsphasen (D1, D2) vorgesehen sind und dass jeder Aufkohlungsphase (D1, D2) zumindest eine vorausgehende Aufstickungsphase (C1, C2, C3) zugeordnet ist.

3. Verfahren nach einem der vorherigen Ansprüche, **dadurch gekennzeichnet, dass** die Behandlungstemperatur in einem Bereich von etwa 780°C bis etwa 1050°C liegt.

4. Verfahren nach einem der vorherigen Ansprüche, **dadurch gekennzeichnet, dass** die Carbonitrierung eine Niederdruck-Cabonitrierung ist.

5. Verfahren nach einem der vorherigen Ansprüche, **dadurch gekennzeichnet, dass** zumindest ein Prozessgaswechsel (F1, F3) zwischen einer Aufstickungsphase (C1, C2, C3) und einer nachfolgenden Aufkohlungsphase (D1, D4) vorgesehen ist, in der das in der Aufstickungsphase (C1, C2, C3) eingesetzte Stickstoffspendergas durch Evakuieren entfernt oder mit einem Inertgas verdrängt wird und/oder dass zumindest ein Prozessgaswechsel (F2) zwischen einer Aufkohlungsphase (D1) und einer nachfolgenden Aufstickungsphase (C3) vorgesehen ist, in der das in der Aufkohlungsphase eingesetzte Kohlenstoffspendergas durch Evakuieren entfernt oder mit einem Inertgas verdrängt wird.

6. Verfahren nach einem der vorherigen Ansprüche, **dadurch gekennzeichnet, dass** das Stickstoffspendergas Ammoniak und/oder Stickstoff aufweist
und/oder dass das Kohlenstoffspendergas Acetylen und/oder Ethylen und/oder Propan und/oder Propen und/oder Methan und/oder Cyclohexan und/oder Cyclopentan aufweist.

7. Verfahren nach einem der vorherigen Ansprüche, **dadurch gekennzeichnet, dass** zumindest eine Diffusionsphase (E1, E2) vorgesehen ist, in der eine Evakuierung erfolgt und/oder in der das metallische Bauteil (1) zumindest im Wesentlichen mit einem Inertgas umgeben ist, und dass die Diffusionsphase (E1, E2) einer Aufstickungsphase (C1) oder einer Aufkohlungsphase (D2) nachfolgt.

## Claims

1. Process for carbonitriding metallic components (1), wherein provision is made of at least one carburization phase (D1, D2), in which the metallic component (1) is carburized with a carbon-donating gas, wherein provision is made of at least one nitriding phase (C1, C2, C3), which is assigned to the carburization phase (D1, D2) and precedes the carburization phase (D1, D2), and wherein the metallic component (1) is nitrided in the nitriding phase (C1, C2, C3) by means of a nitrogen-donating gas superficially at a surface region (4) of the metallic component (1), **characterized in that** provision is made of a heating phase (A), in which the metallic component (1) is heated to a treatment temperature, **in that** the heating phase (A) lies before the nitriding phase (C1, C2, C3) and the carburization phase (D1, D2), **in that** all the nitriding phases (C1, C2, C3) and carburization phases (D1, D2) are effected at the treatment temperature, and **in that** the metallic component (1) is nitrided in a surface region (4) at a thread, an intersection, an edge (3) or a projection, and/or **in that** the metallic component (1) is a transmission component, and/or **in that** the metallic component (1) has a toothing geometry, at which the surface (4) of the component (1) is nitrided.

2. Process according to Claim 1, **characterized in that** a plurality of carburization phases (D1, D2) are provided, and **in that** each carburization phase (D1, D2) is assigned at least one preceding nitriding phase (C1, C2, C3).

3. Process according to either of the preceding claims, **characterized in that** the treatment temperature lies in a range of approximately 780°C to approximately 1050°C.

4. Process according to one of the preceding claims, **characterized in that** the carbonitriding is low-pressure carbonitriding.

5. Process according to one of the preceding claims, **characterized in that** provision is made of at least one process gas change (F1, F3) between a nitriding phase (C1, C2, C3) and a subsequent carburization phase (D1, D4), in which the nitrogen-donating gas used in the nitriding phase (C1, C2, C3) is removed by evacuation or displaced using an inert gas and/or in that provision is made of at least one process gas change (F2) between a carburization phase (D1) and a subsequent nitriding phase (C3), in which the carbon-donating gas used in the carburization phase is removed by evacuation or displaced using an inert gas.

6. Process according to one of the preceding claims, **characterized in that** the nitrogen-donating gas comprises ammonia and/or nitrogen and/or **in that** the carbon-donating gas comprises acetylene and/or ethylene and/or propane and/or propene and/or methane and/or cyclohexane and/or cyclopentane.

7. Process according to one of the preceding claims, **characterized in that** provision is made of at least one diffusion phase (E1, E2), in which evacuation is effected and/or in which the metallic component (1) is surrounded at least substantially with an inert gas, and **in that** the diffusion phase (E1, E2) follows a nitriding phase (C1) or a carburization phase (D2).

## Revendications

1. Procédé de carbonitruration d'éléments métalliques (1), dans lequel il est prévu au moins une phase de cémentation (D1, D2), dans laquelle l'élément métallique (1) est cémenté avec un gaz distributeur de carbone, dans lequel il est prévu au moins une phase de chargement en azote (C1, C2, C3) associée à la phase de cémentation (D1, D2), qui est antérieure à la phase de cémentation (D1, D2), et dans lequel l'élément métallique (1) est chargé en azote en surface sur une région de la surface (4) de l'élément métallique (1) au moyen d'un gaz distributeur d'azote dans la phase de chargement en azote (C1, C2, C3), **caractérisé en ce qu'**il est prévu une phase de chauffage (A), dans laquelle l'élément métallique (1) est chauffé à une température de traitement, **en ce que** la phase de chauffage (A) se situe avant la phase de chargement en azote (C1, C2, C3) et la phase de cémentation (D1, D2), **en ce que** toutes les phases de chargement en azote (C1, C2, C3) et les phases de cémentation (D1, D2) sont exécutées à la température de traitement et **en ce que** l'élément métallique (1) est chargé en azote dans une région de la surface (4) sur un filet, une crête, une arête (3) ou une saillie et/ou **en ce que** l'élément métallique (1) est un composant de boîte de vitesses et/ou **en ce que** l'élément métallique (1) présente une géométrie de denture, sur laquelle la surface (4) de l'élément métallique (1) est chargée en azote.

2. Procédé selon la revendication 1, **caractérisé en ce qu'**il est prévu plusieurs phases de cémentation (D1, D2) et **en ce qu'**au moins une phase antérieure de chargement en azote (C1, C2, C3) est associée à chaque phase de cémentation (D1, D2).

3. Procédé selon l'une quelconque des revendications précédentes, **caractérisé en ce que** la température de traitement se situe dans une plage d'environ 780°C à environ 1050°C.

4. Procédé selon l'une quelconque des revendications précédentes, **caractérisé en ce que** la carbonitruration est une carbonitruration à basse pression.

5. Procédé selon l'une quelconque des revendications précédentes, **caractérisé en ce qu'**il est prévu au moins un changement de gaz de traitement (F1, F3) entre une phase de chargement en azote (C1, C2, C3) et une phase postérieure de cémentation (D1, D4), dans lequel le gaz distributeur d'azote utilisé dans la phase de chargement en azote (C1, C2, C3) est éliminé par mise sous vide ou est chassé avec un gaz inerte et/ou **en ce qu'**il est prévu un changement de gaz de traitement (F2) entre une phase de cémentation (D1) et une phase postérieure de chargement en azote (C3), dans lequel le gaz distributeur de carbone utilisé dans la phase de cémentation est éliminé par mise sous vide ou est chassé avec un gaz inerte.

6. Procédé selon l'une quelconque des revendications précédentes, **caractérisé en ce que** le gaz distributeur d'azote présente de l'ammoniac et/ou de l'azote et/ou en ce que le gaz distributeur de carbone présente de l'acétylène et/ou de l'éthylène et/ou du propane et/ou du propène et/ou du méthane et/ou du cyclohexane et/ou du cyclopentane.

7. Procédé selon l'une quelconque des revendications précédentes, **caractérisé en ce qu'**il est prévu au moins une phase de diffusion (E1, E2), dans laquelle on effectue une mise sous vide et/ou dans laquelle l'élément métallique (1) est au moins essentiellement enveloppé d'un gaz inerte, et **en ce que** la phase de diffusion (E1, E2) suit une phase de chargement en azote (C1) ou une phase de cémentation (D2).
